(19) Europäisches Patentamt

European Patent Office

Office européen des brevets

(11) EP 0 818 706 A2

(12) **EUROPEAN PATENT APPLICATION**

(43) Date of publication:
**14.01.1998 Bulletin 1998/03**

(51) Int Cl.6: **G02F 1/15, G02F 1/21**

(21) Application number: **97304766.5**

(22) Date of filing: **01.07.1997**

(84) Designated Contracting States:
**AT BE CH DE DK ES FI FR GB GR IE IT LI LU MC NL PT SE**

(30) Priority: **09.07.1996 US 679407**

(71) Applicant: **LUCENT TECHNOLOGIES INC.
Murray Hill, New Jersey 07974-0636 (US)**

(72) Inventor: **Steigerwald, Michael Louis
Martinsville, New Jersey 08836 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(54) **Switchable devices with an optical cavity**

(57)    The present invention is directed to an optical device that is switchable between an on and an off state in which an optical cavity is the basis for the contrast between the on and the off states. The optical cavity is incorporated into devices such as character and text displays, shelf price tags, etc. Devices with the optical cavity provide advantages over devices that do not have an optical cavity. For example, Displays made from electrochromic devices with an optical cavity are easier to read than displays without the optical cavity. The electrochromic device is formed on a glass substrate with a reflective metal layer formed thereon. A transparent electrode is formed over the reflective metal substrate. A layer of electrochromic material is then formed over the transparent electrode. Electrolyte is placed in contact with the electrochromic material. A counter electrode is in contact with the electrolyte. The counter electrode provides a reservoir of metal ions that changes the color of the electrochromic material in response to the application of a voltage to the device. A second transparent electrode is in contact with the counter electrode. A transparent substrate is placed over the second transparent electrode. The display is viewed through the transparent substrate. It is advantageous if the combined thickness of the first transparent electrode and the electrochromic layer is about 550 Å to about 1400 Å. The first transparent electrode layer has a thickness of about 300 Å to about 600 Å. The thickness of the electrochromic layer is about 250 Å to about 800 Å.

*FIG. 2*

| | |
|---|---|
| SUBSTRATE | |
| TRANSPARENT CONDUCTOR | |
| COUNTER ELECTRODE | |
| ELECTROLYTE | |
| ELECTROCHROMIC | |
| CONDUCTING DIELECTRIC | |
| REFLECTIVE CONDUCTOR | |
| SUBSTRATE | |

## Description

## Background of the Invention

### Technical Field

The present invention is directed to a switchable optical device with an optical cavity therein which is switchable from an "on" state to an "off" state.

### Art Background

Optical devices that are switchable from an on state to an off state are well known. In the context of the present invention there is an observable difference between the appearance of the device in the "on" state and the device in the "off" state. Electrochromic display devices are one example of such devices. Such devices typically have a display electrode in which a transition metal oxide such as tungsten trioxide is formed on an electronically conducting film such as indium tin oxide. The electrically conductive film is formed over a glass substrate. A layer of electrolyte is formed over the layer of transition metal oxide. The interaction of the metal oxide and the electrolyte when an electric potential is applied to the cell brings about a change in the color of the cell. For example, as described in Green, M. et al., "Electrochromic displays," DISPLAYS pp. 166-173 (October 1988), tungsten trioxide turns from colorless to blue when hydrogen atoms or alkali metal atoms are inserted therein from an electrolyte when a reducing potential is applied to the cell. This change is reversible, i. e., when the potential is reversed, the cell returns to its transparent state. For example, if a device changes from transparent to blue when a reducing potential is applied thereto, the device will change from blue back to transparent with the application of an oxidizing potential thereto. For convenience herein this switch from one potential to the reverse potential thereof is referred to as switching from an "on" state to an "off" state. Whether an oxidizing potential or a reducing potential is associated with a particular device state is a function of the materials from which the device is made. However, the device only changes when a reverse potential is applied thereto. Consequently, once the above-described cell is blue, it will remain blue until a reverse potential is applied to the cell. The device is therefore bistable.

Although materials and structures for electro-optic devices are known, these devices do not demonstrate an acceptable response to the application of a potential. Specifically, switching these devices from an on state to an off state (or vice-versa) takes too much time and consumes too much power. For example, U.S. Patent No. 4,256,379 to Green reports switching times of about six to ten seconds for the devices described therein while acknowledging that switching times of less than 1 second are desirable. Accordingly, electro-optic devices that consume less power when switched from on to off and that switch from on to off in less time than prior art devices are desirable.

### Summary of the Invention

The present invention is directed to devices with an optical cavity which are switchable from a first state (i. e. the on state) to a second state (i.e. the off state). The device state is also reversible, i.e., the device is switchable from on to off, and then back to on, and then back to off, etc. In the context of the present invention, devices that are switched on are devices to which a reducing electrical potential has been applied. Correspondingly, devices that are switched off are devices to which an oxidizing electrical potential has been applied. The devices of the present invention have a contrast between the on and the off states that is particularly desirable.

The device of the present invention has an optical cavity incorporated therein. An optical cavity is a multilayer structure in which the material and thickness of the layers is selected so that the light that is reflected from the several interfacial surfaces in the multilayer structure interferes in predictable and controllable ways. In this regard, the materials and thicknesses of the layers in the multilayer optical cavity are selected so that the desired optical interference is obtained when the device is in both the on and the off states.

For example, in a two-layer optical cavity, the materials and thicknesses are selected so that the light reflected from the device is 180 degrees out of phase when the device is in the on state and zero degrees out of phase when the device is in the off state. Although, in this example, the reflected light is 180 degrees out of phase in the on state and zero degrees out of phase in the off state, the advantage of the present invention derives from the fact that the optical cavity can be tailored to provide the desired degree of interference in both the on and off states. The desired degree of interference depends upon a variety of factors including, for example, the number of layers of material in the optical cavity (i.e. different phase relationships are required to achieve a desired effect in the three reflected ray context than in the four reflected ray context), the desired contrast between the on and off states of the device, and the desired intensity of the device.

In the ideal case, when only two rays of light are reflected from the device and those rays are 180 degrees out of phase, no light is reflected from the device and the device appears black. The phase of the reflected light depends upon the wavelength of the incident light and the material and thickness of the optical cavity layers. The material and thickness of the optical cavity layers are significant because the refractive index of the materials, the difference of the refractive index between layers, and the absorption of the material at a particular wavelength, for example, all affect the phase of the light reflected from the optical cavity.

In the devices of the present invention, the effect of the optical cavity is switchable from an on to an off state. Therefore, the light that is reflected from the optical cavity in the on state has a different intensity than the light reflected from the optical cavity in the off state.

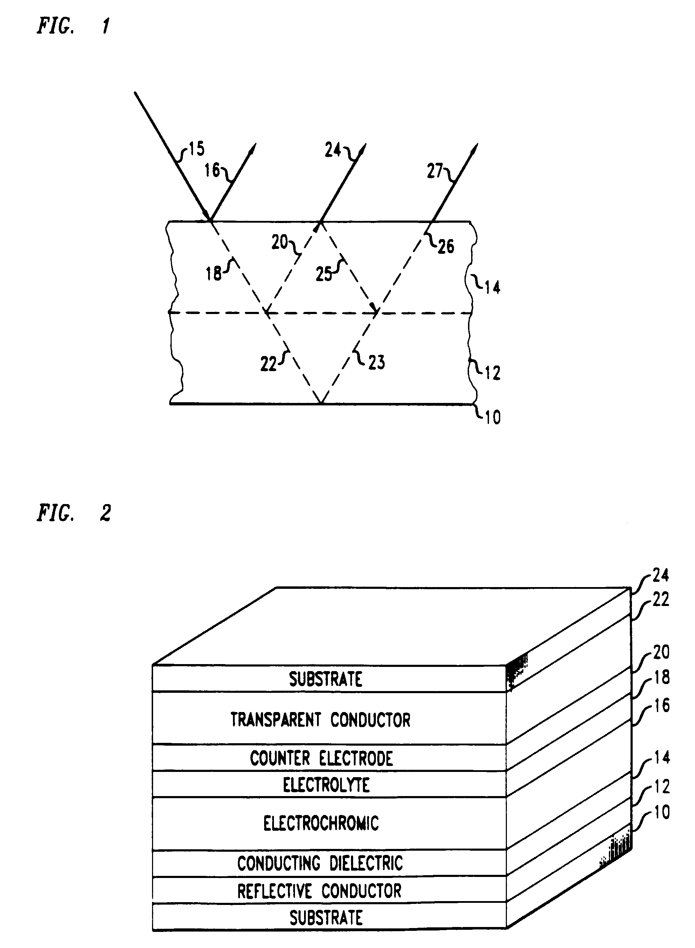

An example of an optical cavity that incorporates an electrochromic layer is illustrated in FIG. 1. FIG. 1 depicts a three layer structure having a reflector layer 10 over which is formed a transparent conductor layer 12, over which is formed a layer of electrochromic material 14. A portion of the incident radiation 15 is reflected from the surface of the electrochromic layer 14 and a portion of the radiation is transmitted through the electrochromic layer 14. The reflected radiation is 16 and the transmitted radiation is 18 in FIG. 1. The transmitted radiation 18 that is incident upon the interface between the electrochromic layer 14 and the transparent conductor layer 12 is both reflected (the reflected ray is designated 20) and transmitted into the transparent conductor layer (the transmitted ray is designated as 22). For convenience in this discussion, the interface between the two layers 12 and 14 ifs referred to as interface 14/12 when the trajectory of the ray is downward through the cavity and interface 12/14 when the trajectory of the ray is upward through the cavity.

The transmitted ray 22 that is incident on the reflector layer 10, is completely reflected back through the transparent conductor layer 12. The reflected ray 23 is incident upon interface 12/14 and is both reflected (not shown) by and transmitted through (ray 26) interface 12/14. Ray 26 is then incident on the backside of the surface of layer 14, through which it is transmitted as ray 27. The ray 20 that is reflected from interface 14/12 is then incident on the backside of the surface of layer 14 where it is both transmitted (ray 24) and reflected (ray 25). The reflected radiation 25 is then incident on interface 14/12, where it is both transmitted (not shown) and reflected (not shown).

In the device of the present invention, the materials and thickness of the electrochromic layer and the transparent conductor layer are selected so that the three rays 16, 24, and 27 destructively interfere with each other to a desired degree when the device is in one of either the on or the off state. For the desired contrast between the on and the off state, it advantageous if the three rays constructively interfere when the device is in the other device state.

Whether a structure as depicted in FIG. 1 will function as an optical cavity is determined primarily by the real indices of refraction of the electrochromic layer and the transparent conductor layer, and the absorption of the reflector layer at the relevant wavelength. These relationships are discussed in Yeh, P., Optical Waves in Layered Media, Ch. 7, pp. 144-151 (1988). The thicknesses of the electrochromic layer and the transparent conductor layer are selected to provide the desired phase relationship between the output rays. The required thicknesses are determined by computer modeling, i.e., by solving Maxwell's equations for the boundary values based upon the refractive index and the absorption of the selected materials at a given wavelength. The given wavelength depends upon the incident radiation. For example, if the exposing radiation is visible light (which is comprised of light with wavelengths in the range of 400 nm to 750 nm) then the wavelength selected for this determination is somewhere within this range. Typically, the selected wavelength will be approximately mid-range. The optical thickness (the optical thickness is the wavelength of incident light divided by the index of refraction) of these layers is then determined based upon the selected wavelength. Typically, the thickness of each of the layers in the optical cavity is less than the selected wavelength. In the above example where the incident radiation is visible light, the optical thickness of the layers in the optical cavity is approximately 200 nm to about 300 nm.

The device of the present invention is described in terms of layers of material. Rather than describe the device in terms of layers formed on a "substrate," the device is described in terms relative to the viewer of the display device. In this regard, the first layer is the layer farthest from the viewer and each successive layer is closer to the viewer.

The first layer is a reflective layer referred to hereinafter as a mirror. The appearance of the device in the off state (i.e. the state in which the reflected rays interfere constructively) is largely a function of the reflectivity of the mirror. Typically, the mirror is a glass or plastic substrate with a layer of metal formed thereon. The metal is selected for its reflectivity; i.e. the appearance of the device to the observer in the environment in which the device will be used. The metal will affect the appearance of the device in both the on and off states. For example, silver is a metal with a high reflectivity that provides a very bright appearance. Such a metal is useful, because, in the off state, the silver metal provides the device with a very bright appearance. In the context of displays, devices in the off state are typically the display background, while devices in the on state are the display foreground. A display with a very bright background would be selected for use in a dark environment, such as a darkened room or nighttime use.

If, however, the metal is chromium (a metal with less reflectivity than silver), the metal will provide a device which is darker in the on state. Such a device is useful in a bright environment, such as very bright sunlight. If the metal has a reflectivity that is intermediate between that of silver and that of chromium, then the background is somewhat darker than the background provided by silver and the foreground is somewhat brighter that the foreground provided by chromium. Since, by definition, a reflective material neither strongly transmits nor strongly absorbs light, the metal layer should be relatively opaque, i.e. very little of the visible incident radiation should be transmitted through the metal layer. Therefore, the thickness of the layer depends upon the thickness that will provide the desired opacity. For example, if the metal is aluminum, it is advantageous if the thickness of the aluminum layer is at least about 1000 Å.

The metal is applied on the glass substrate using conventional expedients such as sputtering which are well known to one skilled in the art. It is also advantageous if the reflecting surface is roughened to the point where the reflective surface is not specular, i.e. the angle of incidence of the incident radiation is not equal to the angle of reflection of the reflected radiation for most of the incident radiation from the macroscopic perspective of the viewer. One skilled the art will appreciate the fact that the degree to which the surface is roughened is largely a matter of design choice and is done primarily to prevent the device from reflecting an image of the viewer back to the viewer. Typically, the substrate is roughened and the metal is deposited thereon.

A layer of a transparent conductor material is applied over the reflective surface. Materials useful as transparent conductors are well known to one skilled the art. Examples of suitable materials include tin oxide, indium tin oxide (ITO), doped tin oxide, zinc oxide and other materials well known to one skilled in the art. Since the time it takes to switch the device from on to off is affected by the thickness of the transparent conductor, it is advantageous if the transparent conductor is as thin as possible. As previously mentioned, it is advantageous if the optical thickness of the transparent conductor is less than the wavelength of the incident radiation. The thickness of the transparent conductor is determined as previously described based upon the selected wavelength. It is advantageous if the optical thickness of the transparent conductor is less than about one-quarter of the selected wavelength of the exposing radiation.

A layer of electrochromic material is applied over the surface of the transparent conductor. Electrochromic materials are well known to one skilled in the art. Electrochromic materials are typically transition metal oxides such as tungsten oxide ($WO_3$), molybdenum oxide ($MoO_3$), and vanadium oxide ($V_2O_5$). Such oxides dissolve metal atoms, particularly monovaent metal atoms such as atoms of an alkali metal, copper, or silver, and change color in so doing. Other metal sensitive compounds are the oxides of manganese, palladium, platinum, rhenium, and titanium. These metal oxides also exhibit a color change upon the dissolution of metal or hydrogen therein and the color change is reversible. Both the index of refraction and the absorption coefficient of the electrochromic material change when the device is subjected to a reversed potential. Consequently, the electrochromic material has a first index of refraction and a first absorption coefficient that correspond to the oxidized state and a second index of refraction and a second absorption coefficient that correspond to the reduced state. The index of refraction and the absorption coefficient in both states are considered in determining the thicknesses of the electrochromic layer at a selected wavelength in the manner previously described. The thickness of the layers are selected to obtain the desired degree of contrast between the appearance of the device in its on and off states.

The above-described switchable optical cavity has been described in terms of an electrochromic compound which undergoes a reversible change in its refractive index in response to the introduction or removal of metal in the material. The electrochromic materials previously described are examples of a class of metal sensitive materials. The refractive index of these materials is affected by the presence of metal therein. Other materials that undergo a reversible index change in response to a stimulus are well known. Examples of these materials include thermochromic materials and photochromic materials. It will be readily apparent to one skilled in the art that the selection of materials needed to fabricate devices incorporating the switchable optical cavity of the present invention depends upon the material that undergoes a change in its refractive index in response to a stimulus.

In the embodiment of the device in which an electrochromic material is used, the device must include an electrolyte material that acts as a reservoir for the metal that induces the desired change in the refractive index of the electrochromic material. The metal is introduced into or removed from the electrochromic material in response to an electrical potential that is applied to the device. Consequently, the transparent material in the previously described embodiment is a transparent electrode material.

In those embodiments in which the change in refractive index is not in response to a change in electrical potential, the transparent material in the optical cavity is not required to function as an electrode. For example, if the material is a thermochromic material, then the transparent layer does not have to function as an electrode. However, the transparent layer is required for the combination of the two layers to function as an optical cavity. Such devices are otherwise required to meet the previously set forth parameters. That is, the transparent layer is formed over the mirrored substrate and the layer of material that undergoes a reversible change in refractive index is formed over the transparent layer.

Furthermore, an electrochromic device of the present invention will have different layers of material than a thermochromic or photochromic device of the present invention. An electrochromic device of the present invention is described in detail below. The device includes a layer of electrolyte that introduces metal into the electrochromic layer in response to an electrical potential. Therefore, the device must contain electrodes and an electrolyte layer to perform in the desired manner. By contrast, a thermochromic device will include a heater to induce the desired index change in the thermochromic material. Such a device does not require either electrodes or an electrolyte layer. Similarly, electrodes and an electrolytic layer are not required in a photochromic device because the photochromic material undergoes an index change in response to a certain wavelength of light. However, regardless of the type of device, the previously described thickness parameters for the transparent layer and the layer that undergoes a change in its refractive index, and the relationship between these parameters, is the same.

The present invention is capable of being incorporated into numerous devices. For example, in the electrochromic display device embodiment of the present invention, the transparent layer is a transparent electrode and the material that undergoes a reversible change in refractive index is an electrochromic material. Such a device is assembled in the following manner. A layer of electrolyte is formed over the electrochromic material. The electrolyte material depends largely on the material selected for the electrochromic material and the desired appearance of the resulting device. Specifically, the electrolyte contains a metal that is readily dissolved in the electrochromic layer. For example, if the electrochromic material is WO3, then it is advantageous if the electrolyte contains lithium. Electrolytes that interact suitably with electrochromic materials are well known to one skilled in the art. Typically, the metal in the electrolyte is in the form of a salt combined with a suitable solvent therefore. For example, if the metal salt is lithium perchlorate, propylene carbonate is selected as a suitable solvent therefore because it has low volatility and the requisite polarity. The thickness of the layer is again largely a matter of design choice. However, it is advantageous if the electrolyte is at least two microns thick, because this threshold thickness is comparable to several wavelengths of light. The objective of this thickness is to effectively eliminate visible interference between light reflected from the boundary between the electrolyte and the underlying electrochromic layer and the light reflected from the boundary between the electrolyte and the layer overlying the electrolyte. The electrolyte layer can be in either a liquid state, a solid state, or a gel state. In any state, the electrolyte must contain a metal salt and a solvent therefore.

A counterelectrode layer is then formed over the electrolyte layer. Materials and thicknesses for the counterelectrode layer are well known to one skilled in the art. Typically, the counterelectrode is also a transition metal oxide. The counterelectrode layer acts as a storage location for the metal to be transferred into the electrochromic layer when an electrical potential is applied to the device. It is advantageous if the redox efficiency of the counterelectrode matches the efficiency of the electrochromic layer. For example, if the electrochromic material is $WO_3$, then a material such as lithiated vanadium oxide ($Li_xV_2O_5$) is used.

An electrical contact to the counter electrode is provided by forming a second transparent conductor layer over the counter electrode. This second transparent conductor layer is formed from the same choice of materials as the first transparent conductor layer. Although the thickness of the second transparent conductor layer is largely a matter of design choice, the thickness of the second transparent conductor layer is about 500 Å to about 1000 Å. Again, the second transparent conductor layer is applied using conventional expedients.

Another substrate is then placed on the second transparent electrode. Since this substrate is interposed between the viewer and the electrochromic material, the substrate is an optically transparent material such as glass. However, other materials are also contemplated, provided they have the requisite degree of transparency at the appropriate wavelengths. Suitable substrate materials are well known to one skilled in the art.

In the present invention the materials and thicknesses of the first transparent conductor layer and the electrochromic layer are selected to provide a device with a particularly desirable contrast between its on and off states. It is advantageous if the combined thickness of the two layers is about 550 Å to about 1400 Å. The thickness of the transparent conductor layer is about 300 Å to about 600 Å. The thickness of the electrochromic layer is about 250 Å to about 800 Å.

## Brief Description of the Drawings

FIG. 1 illustrates the behavior of light rays incident on a multilayer structure that functions as an optical cavity.

FIG. 2 is a schematic end view of a device of the present invention.

FIG. 3 is a graph which illustrates a method for selecting the thickness of the electrochromic layer and the thickness of the transparent conductor layer for a device of the present invention.

## Detailed Description

The present invention is directed to optical devices with a switchable cavity therein. The devices are switchable from an on to an off state. The optical cavity provides a particularly desirable contrast between the on and off states of the device.

In the present invention, the optical cavity is incorporated into a variety of optical display devices. These devices include character and text displays, point-of-sale terminals, shelf price tags, etc. In one embodiment of the present invention, the optical cavity is incorporated into an electrochromic device. A full display is then built by combining numerous such electrochromic devices together in an array. The assembly of electrochromic devices into a display is conventional technology well-known to one skilled in the art. The electrochromic devices have a contrast between the on and off states which more closely resembles the contrast between black type and a white page than conventional displays.

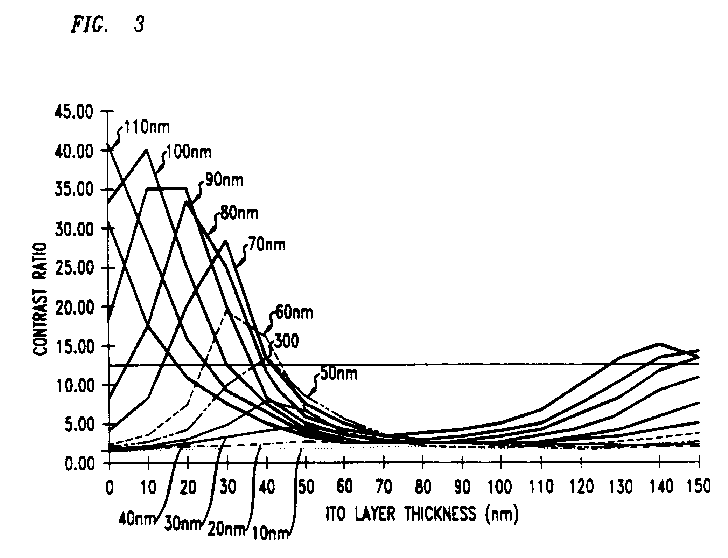

In this embodiment, the optical cavity is formed on a mirrored substrate. The device is illustrated in FIG. 2. The electrochromic device consists of successive layers of a transparent conductor electrode 12, an electrochromic layer 14, an electrolyte layer 16, a counter electrode 18, a second transparent electrode 20, and a transparent substrate 22. These layers are formed successively on a substrate that reflects visible radiation incident thereon. Examples of suitable reflective substrates include aluminum and chromium coated glass substrates.

Electrochromic devices consisting of layers 12-22 are described in Bange, K., et al., "Electrochromic Materials for Optical Switching Devices," Adv. Mater. Vol. 2 (No. 1), pp. 10-16 (1990). The materials useful for these layers and the conditions under which these layers are formed is described in Bange et al.,. In the present invention the thicknesses and the materials used to form layers 12 and 14 are selected to provide an optical cavity in the device. As previously noted, an optical cavity is a multilayer structure in which the material and thickness of the layers are selected so that the light reflected from the interfaces of the layers with adjacent layers interfere with each other in the desired manner, i.e. either constructively or destructively, depending upon the whether the device is in the on or the off state. The thicknesses of the layers required to achieve the desired effect are selected by solving Maxwell's equations for a selected wavelength of light that is within the range of wavelengths present in the incident radiation. The requisite thickness of the layers is a function of the index of refraction and the absorption coefficient of the materials selected for the optical cavity. Because the index of refraction and the absorption coefficient of electrochromic materials are different in the on state than they are in the off state (as previously noted, the materials are a first color when a reducing potential is applied to the device and a second color when an oxidizing potential is applied to the device), the thickness of the electrochromic material is selected to achieve the desired effect in both states.

The device of the present invention is different from devices that prescribe the use of a thick transparent conductor electrode and a thick electrochromic layer (i.e. thicknesses larger than a wavelength of light in the visible spectrum) in that the materials and thickness of the transparent conductor and counter electrode are selected to provide an environment in which a desired amount of destructive interference occurs between the light reflected from the interfaces between layers of material in the optical cavity in one of the two device states (either the on or the off state). In the other device state, a different amount of interference occurs in order to provide visual contrast between the on and off states. It is advantageous if constructive interference occurs in the second device state.

Prior art devices primarily utilize the difference in absorption to provide a difference in contrast. In such devices, the way in which contrast is enhanced is to provide a thick layer of the material that changes color in response to a change from the on to the off state. However, the thicker the layer of switchable material, the more time and power is required to switch the device from its on state to its off state. In the devices of the present invention, the thickness of the device layer (in particular the transparent conductor and the thick electrochromic layer) is much less (i.e. on the order of less than a wavelength of light in the visible spectrum). Consequently, the devices of the present invention are switched from the on state to the off state in less time and using less power than prior art devices. For example, the devices of the present invention switch from on to off (or vice-versa) in less than about 1 second. This is in contrast with the switching times of about six to ten seconds reported in U.S. Patent No. 4,256,379 to Green.

## Example 1

The thicknesses of the transparent electrode layer and the electrochromic layer for a device of the present invention were determined in the following manner. An electrochromic material which exhibits a change in absorption in the region of the electromagnetic spectrum that is visible to the human eye (e.g. at wavelengths in the range of about 400 nm to about 750 nm). Tungsten oxide $WO_3$ was the material selected for this example. A layer of WO3 has an appearance that ranges from colorless to pale yellow. When the material is reduced to $Li_xWO_3$ (where x is less than 1 and typically is about 0.3), it has a dark blue color. Indium tin oxide (ITO) was selected as the transparent conductor material for this example. Aluminum was selected as the reflective material.

The desired thicknesses of the $WO_3$ layer (layer 14 in FIG. 1) and the ITO layer were first estimated using the following formula:

$$t = \lambda/4n$$

where t is the coating thickness, $\lambda$ is the wavelength of incident light, and n is the index of refraction of the coating material. In this example, the preferred contrast is obtained if the lithiated WO3 is anitreflective (as noted above, the $WO_3$ is lithiated in its reduced state). Therefore, the index of refraction that was used to solve the above equation was that of lithiated $WO_3$ (about 1.5 at 550 nm). Since the optical cavity consists of two layers applied over a reflective substrate, the equation was also solved for the ITO layer (about 2 at 550 nm). As previously noted, 550 nm was chosen as the wavelength of the incident radiation because it is roughly in the center of the visible spectrum of the incident radiation when the incident radiation is white light and also because the human eye is most sensitive at this wavelength. Using an average of the two indices, a first estimate of the combined thickness of the two layers (80 nm) was obtained. This is a combined thickness that is significantly less than the combined thickness of layers of similar materials in prior art devices.

Computer modeling was then used to select the thickness of the individual layers (12 and 14 in FIG. 1). Commercially available software (TF Calc. from Software Spectra, Inc.) was used for this purpose. The software calculates the absorption, reflection, and transmission of light through multiple layers of material based on the classical theories of electricity and magnetism. The software calculates the luminosity (as defined) for the off state and for the on state. The ratio of the two luminosities is then calculated. (This ratio is plotted for varied $WO_3$ and ITO layer thicknesses in FIG. 3.)

A ratio was selected between the reflected luminosity (in the context of this calculation, "luminosity" was the intensity of the reflected light convolved with the sensitivity of the human eye) from the optical cavity in the on state and the reflected luminosity from the optical cavity in the off state to solve the equations. The ratio was high to obtain a high contrast between the device in the on state and the device in the off state. Based on the following parameters, the software provided the relationships between the thickness of the $WO_3$ layer, the ITO layer and the contrast ratio between the device in the on state and the device in the off state. The relationships that were obtained as a result of the above-identified calculations are illustrated in FIG. 3.

From the relationships illustrated in FIG. 3, an ITO layer thickness of 40 nm and a $WO_3$ layer thickness of 50 nm were selected. The thicknesses were selected using two guiding principles. First, the relative thicknesses were selected to obtain a contrast between the device in the on state and the device in the off state that was at least as good as the contrast between $WO_3$ and lithiated $WO_3$. This contrast ratio is obtained from a $WO_3$ is of sufficient thickness such that it absorbs all of the incident light ( i.e., a thickness of about 1000 nm) a $WO_3$ layer and is illustrated by the horizontal line in FIG. 3. Consequently, the selected thicknesses for the $WO_3$ layer was a thickness that provided a contrast ratio above that of the horizontal line. Also, the thicknesses were selected to keep the total thickness of the two layers to about 80 nm. Both of these objectives are achieved by selecting thicknesses (i.e. 40 nm for the ITO layer and 50 nm for the $WO_3$ layer) that correspond to the peak 300 in FIG. 3.

Devices containing the optical cavity described above were fabricated using conventional expedients for forming films on substrates that are well known to one skilled in the art. A glass substrate (a 320 mm x 400 mm glass (Corning 7059) plate obtained from the Corning Corp.) was roughened using a conventional sandblasting technique. The glass was then cleaned using a standard cleaning procedure. A 1000 Å-thick layer of aluminum was then sputtered onto the substrate using standard rf sputtering and a standard aluminum\zirconium target (approximately 1% by weight zirconium). The substrate was then masked with strips of mylar tape, approximately one-half inch in width. A 400-Å thick layer of ITO was then formed on the surface of the substrate using standard sputtering techniques. A 500Å-thick layer of $WO_3$ was then formed on the substrate using a tungsten target in an Argon/oxygen atmosphere using a technique described in Kaneko, H., et al., "Electrochemichromism of RF Reactively Sputtered Tungsten-Oxide Films", J. Appl. Physics, 53, pp. 4416-4421 (1982). The mylar mask was then removed from the substrate and the resulting structure had strips of exposed aluminum on the surface, alternating with strips of the multilayer ($WO_3$-ITO-Al) structure.

The substrate was then separated in pieces that were roughly 3 cm x 4 cm. Each piece had a portion of exposed aluminum on its surface form use as a contact point.

Counter electrodes were prepared by forming a layer of ITO on the surface of a glass substrate as described previously in this example. The ITO layer had a thickness of about 500 Å. The ITO layer was then cleaned by exposing the ITO layer to an oxygen plasma for 10 seconds. A layer of vanadium oxide sol-gel was then applied onto the ITO surface using standard spinning techniques. The substrate was then annealed at approximately 100°C for approximately one hour. The vanadium oxide layer had a thickness of about 1000 Å. The vanadium oxide layer was loaded with lithium using a 1M solution of $LiClO_4$ in propylene carbonate using standard electrochemical techniques.

An electrochemical cell was then prepared by placing the $WO_3$-ITO-Al structure (the working electrode), the vanadium-oxide counter electrode and a piece of lithium foil as the reference electrode in a beaker containing 1 M $LiClO_4$ in dry propylene carbonate that had been stored over a molecular sieve. The electrode was cycled in an inert atmosphere drybox between potentials of 3.5 V and 2 V (both relative to the reference electrode).

At the oxidizing voltage (3.5 V) the working electrode appeared "bleached." Consequently, both the $WO_3$ layer and the ITO layer of the device were essentially invisible to the observer, and the only part of the device being observed in the roughened aluminum mirror underlying the ITO layer.

At the reducing voltage (2 V) the working electrode is a dark blue to black color. Consequently, the $WO_3$ was converted to $Li_xWO_3$. The time it took for the device to switch from "colored" to "bleached" in response to a change in potential was observed to be less than one second. The response time was observed to be the same when the device was switched from "bleached" to "colored." The amount of charge required to switch the device from one state to the other was estimated to be about 1 mC/cm$^2$.

**Claims**

1. An optical device comprising:

a reflective substrate on which is formed successive layers of a transparent material and a compound which undergoes a reversible change in refractive index in response to a stimulus in contact with the transparent material, wherein the materials and the thickness of the transparent material and the compound that undergoes a reversible change in refractive index are selected to provide an optical cavity and wherein the thickness of the transparent layer and the compound layer is each less than a selected wavelength which is within a range of wavelengths of incident radiation.

2. The optical device of claim 1 wherein the compound that undergoes a reversible change in refractive index is selected from the group consisting metal sensitive materials, thermochromic materials, and photochromic materials.

3. The optical device of claim 2 wherein the transparent material is a transparent electrode material and the compound that undergoes a reversible change in refractive index is a metal sensitive material and the device further comprises a layer of an electrolyte material in contact with the metal sensitive material, wherein the electrolyte contains a metal that dissolves in the metal sensitive compound to change the color thereof in response to a change in the potential of the optical device.

4. The optical device of claim 3 further comprising a counterelectrode in contact with the electrolyte wherein the counterelectrode provides a reservoir of the metal which changes the color of the metal sensitive material when dissolved therein and a second transparent electrode formed over the counterelectrode and a transparent substrate layer formed over the transparent electrode.

5. The optical device of claim 4 wherein metal sensitive material is an electrochromic material and the optical device is an electrochromic display device.

6. The electrochromic device of claim 5 wherein the thickness of the first electrode layer and the metal-containing layer are selected by selecting a desired degree of constructive interference for the light reflected from the optical cavity when a first potential is applied to the device and a desired degree of destructive interference for the light reflected from the optical cavity when a second potential is applied to the device and determining the materials and thickness of the layers required to provide the desired degree of interference.

7. The electrochromic device of claim 6 wherein the first potential is an oxidizing potential and the second potential is a reducing potential.

8. The electrochromic device of claim 6 or claim 7 wherein the thickness of the first electrode and the thickness of the electrochromic layer is determined by selecting a wavelength that is representative of the range of wavelengths of the radiation incident on the electrochromic device, calculating the combined thickness of the two layers as a function of the selected wavelength and the average of the indices of refraction of the two layers at the selected wavelength, determining the relationship between a contrast ratio, the thickness of the first electrode, and the electrochromic layer, and selecting a thickness for the first electrode and the electrochromic layer that provides the desired contrast.

FIG. 1

FIG. 2

| SUBSTRATE |
|---|
| TRANSPARENT CONDUCTOR |
| COUNTER ELECTRODE |
| ELECTROLYTE |
| ELECTROCHROMIC |
| CONDUCTING DIELECTRIC |
| REFLECTIVE CONDUCTOR |
| SUBSTRATE |

*FIG. 3*